# EUROPÄISCHE PATENTSCHRIFT

(11) **EP 4 244 114 B1**
(45) Veröffentlichungstag und Bekanntmachung des Hinweises auf die Patenterteilung: **03.09.2025**
(21) Anmeldenummer: 21732292.4
(22) Anmeldetag: 14.06.2021
(51) Int. Cl.: B61D 3/20

(54) **GELENKWAGENANORDNUNG FÜR EINEN EISENBAHNGÜTERZUG**
ARTICULATED WAGON ARRANGEMENT FOR RAILWAY GOODS TRAIN
AMÉNAGEMENT DE WAGON ARTICULÉ POUR UN TRAIN MARCHANDISES FERROVIAIRE

(30) Priorität: 10.11.2020 EP 20206753
(43) Veröffentlichungstag der Anmeldung: 20.09.2023
(73) Patentinhaber: SWS PS Power Solutions GmbH, 8010 Graz (AT)
(72) Erfinder: WEGMÜLLER, Beat, 4950 Huttwil (CH)
(74) Vertreter: Bird & Bird LLP - Hamburg
(86) Internationale Anmeldenummer: PCT/EP2021/065929
(87) Internationale Veröffentlichungsnummer: WO 2022/100896

(56) Entgegenhaltungen:
- EP-A1- 2 647 540
- WO-A2-2018/190718
- CN-U- 201 901 145
- CN-U- 207 225 347
- RU-U1- 176 833

## Beschreibung

Die vorliegende Erfindung betrifft die Verwendung einer Energieversorgungseinheit für eine Gelenkwagenanordnung für einen Eisenbahngüterzug.

Gelenkwagen sind zum Beispiel durch WO2018/190718 A2 bekannt.

Die Gelenkwagenanordnung umfasst einen Gelenkwagen zum Transport von Containern einschließlich Sattelanhängern, insbesondere einen sogenannten Containertragwagen (CTW), wobei die Container beispielsweise sogenannte Reefer-Container, Tank-Container, Kühl-Wechselbrücken oder Kühl-Sattelanhänger sein können. Der Gelenkwagen umfasst einen ersten Wagenteil und einen zweiten Wagenteil, wobei der erste und der zweite Wagenteil über eine Gelenkkupplung gelenkig mindestens um eine vertikale Gelenkachse miteinander gekoppelt sind und im Bereich der Gelenkkupplung an ihren zueinander weisenden Enden vorzugsweise auf einem gemeinsamen Drehgestell, insbesondere einem Jakobs-Drehgestell, abgestützt sind. Weitere Drehgestelle sind vorzugsweise an den voneinander wegweisenden Enden der beiden Wagenteile vorgesehen. Der erste Wagenteil weist an seiner Oberseite einen ersten Containerstellplatz für einen oder mehrere Container auf und der zweite Wagenteil weist an seiner Oberseite einen zweiten Containerstellplatz für einen oder mehrere Container auf.

Bei der Gelenkwagenanordnung wird ferner eine Energieversorgungseinheit zur vorzugsweise autonomen Energieversorgung verwendet, insbesondere mit elektrischer Energie, von auf dem Gelenkwagen geladenen Containern. Autonome Energieversorgung meint in diesem Zusammenhang eine Energieversorgung, die ohne oder zumindest ohne kontinuierliche Energieversorgung von der Lokomotive, einem anderen Gelenkwagen oder der Oberleitung auskommt, vorzugsweise keinen entsprechenden Anschluss zu der Lokomotive, den anderen Gelenkwagen oder der Oberleitung aufweist.

Ähnliche Gelenkwagenanordnungen sind aus dem Stand der Technik bekannt. Solche Gelenkwagenanordnungen sind unter anderem zur Aufnahme von Containern vorgesehen, die für den Transport von Temperatur-kontrollierten Gütern bestimmt sind, wie beispielsweise Reefer-Container, Tank-Container, Kühl-Wechselbrücken oder Kühl-Sattelanhänger. Derartige Container bringen hohe Anforderungen an die Energieversorgung mit sich, da sie einerseits einen hohen Energiebedarf zum Betreiben der Kühl- bzw.

Heizanlage haben und andererseits eine geschlossene Kühl- bzw. Heizkette gewährleisten müssen, d.h. nicht nur während der Fahrt, sondern auch im Stillstand sowie im Rangier- und Umschlagbetrieb eine ununterbrochene Energieversorgung benötigen. Daher ist eine Energieversorgung über benachbarte Wagen, Lokomotive oder Oberleitung nicht ideal, da hierbei eine ununterbrochene Energieversorgung dabei nicht oder zumindest nicht ohne Umstände möglich ist.

Ferner sind Gelenkwagenanordnungen bekannt, die Energieversorgungseinheiten mit Batterien aufweisen. Aufgrund des hohen Energiebedarfs der Container sind solche batteriebetriebenen Energieversorgungseinheiten jedoch relativ groß, so dass die Unterbringung der Energieversorgungseinheit eine Herausforderung darstellt. Gemäß einer bekannten Lösung ist die Energieversorgungseinheit unterhalb des Containerstellplatzes untergebracht. Dies hat jedoch den Nachteil, dass der Containerboden etwas erhöht sitzen muss und damit aufgrund der festen Höhenbeschränkung eines Eisenbahngüterzuges insgesamt weniger Platz für die Container vorhanden ist bzw. bestimmte Container nicht transportiert werden können.

Daher ist es die Aufgabe der vorliegenden Erfindung, eine Energieversorgungseinheit derart zu verwenden, dass eine ununterbrochene Energieversorgung von geladenen Containern auch im Stillstand und Rangierbetrieb einfach möglich ist und die eine maximale Ladekapazität für zu ladende Container aufweist.

Diese Aufgabe wird durch eine Verwendung gemäß Anspruch 1 gelöst.

Auf diese Weise wird der ohnehin freie spaltförmige Platz zwischen den Containern benachbarter Wagenteile eines Gelenkwagens für die Unterbringung der Energieversorgungseinheit genutzt. Dieser Platz ist ausreichend groß, um eine Energieversorgungseinheit unterzubringen, welche die Kühl- oder Heizanlage eines Containers für Temperatur-kontrollierte Güter versorgen kann. Gleichzeitig wird auf diese Weise kein Platz unterhalb der Containerstellplätze oder an anderen die Containerstellplätze einschränkenden Orten der Wagenteile von der Energieversorgungseinheit eingenommen, so dass der der für die Container verfügbare Raum durch die Energieversorgungseinheit nicht eingeschränkt wird. Außerdem kann die Energieversorgungseinheit im kombinierten Verkehr als Ladeeinheit deklariert werden, so dass die Energieversorgungseinheit nicht als Bestandteil des Gelenkwagens angesehen wird. Dadurch erübrigt sich eine Anpassung der Zulassung des Gelenkwagens und damit eine Änderung bzw. Erweiterung der bestehenden Wagennummer, wenn die Energieversorgungseinheit mit einem bereits zugelassenen Gelenkwagen kombiniert wird.

Erfindungsgemäß umfasst die Energieversorgungseinheit eine Tragstruktur und mehrere an bzw. in der Tragstruktur befestigte Energieversorgungsbauteile. Die Tragstruktur hat vorzugsweise eine geschlossene Gehäuseform, beispielsweise eine Stahlrahmenkonstruktion mit Außenverschalung aus Stahlblech. Mittels einer solchen Tragstruktur können die Energieversorgungsbauteile geschützt und verlässlich an dem Gelenkwagen befestigt werden.

Dabei ist die Tragstruktur über eine Adaptervorrichtung an dem Gelenkwagen, vorzugsweise am ersten oder am zweiten Wagenteil, befestigt. Eine Adaptervorrichtung erlaubt eine sichere Befestigung der Energieversorgungseinheit an dem Gelenkwagen, ohne dass dieser wesentlich verändert werden muss.

Dabei ist es ferner bevorzugt, wenn die Adaptervorrichtung mindestens eine Adapterplatte, vorzugsweise zwei in Querrichtung des Gelenkwagens beabstandete Adapterplatten, umfasst, die an dem zum zweiten Wagenteil weisenden Ende des ersten Wagenteils an dessen Oberseite befestigt, insbesondere verschraubt, ist bzw. sind und zum zweiten Wagenteil hin ragt bzw. ragen. Solche Adapterplatten bieten eine sichere Basis und Befestigung der Energieversorgungseinheit im Bereich der Gelenkkupplung im Wesentlichen mittig zwischen dem ersten und zweiten Wagenteil bzw. den entsprechenden geladenen Containern.

Weiter ist es bevorzugt, wenn die Adaptervorrichtung, insbesondere die Adapterplatte bzw. Adapterplatten, vorzugsweise an ihrer Oberseite, Befestigungszapfen aufweist und wenn die Tragstruktur, vorzugsweise an ihrer Unterseite, entsprechende Zapfenaufnahmen zum Eingriff und vorzugsweise auch zum Verrasten mit den Befestigungszapfen aufweist. Vorzugsweise sind zwei in Querrichtung beabstandete Adapterplatten vorgesehen, die an ihrer Oberseite jeweils zwei Befestigungszapfen aufweisen und mit vier entsprechenden an der Tragstruktur, vorzugsweise am Stahlrahmen der Tragstruktur, vorgesehenen Zapfenaufnahmen eingreifen und verrasten können. Mit solchen Befestigungszapfen und entsprechenden Zapfenaufnahmen kann die Energieversorgungseinheit sicher, einfach und schnell an der Adaptervorrichtung und damit an dem Gelenkwagen befestigt werden.

Dabei ist es außerdem bevorzugt, wenn die Befestigungszapfen Containerzapfen nach Norm UIC 571-4 sind. Solche Befestigungszapfen sind standartmäßig an den Containerstellplätzen zur Befestigung der Container vorgesehen. Vorzugsweise sind auch die Zapfenaufnahmen nach Norm UIC 571-4 ausgebildet. Solche Zapfenaufnahmen sind standartmäßig am Boden der Container zum Eingriff mit den Befestigungszapfen vorgesehen. Die Verwendung derartiger genormter Standartverbindungselemente hat den Vorteil, dass sie nicht eigens zertifiziert werden müssen.

In einer bevorzugten Ausführungsform umfassen die Energieversorgungsbauteile mindestens einen Energiespeicher. Mit einem solchen Energiespeicher können die Container für eine bestimmte Zeit völlig unabhängig von äußeren Energiequellen mit Energie versorgt werden. Außerdem kann ein solcher Energiespeicher in aufladbarer Form als Zwischenspeicher bei einem Anschluss an eine äußere Energieversorgung genutzt werden.

Dabei ist es besonders bevorzugt, wenn der Energiespeicher mindestens eine aufladbare Batterie umfasst, vorzugsweise zwischen drei und sieben Hochleistungs-Akku-Strings aus LiFePO4 mit je 9kWh und modularer Speicherkapazität von 27kWh bis 63kWh. Eine derartige aufladbare Batterie kann elektrische Energie für die Container bereitstellen, wenn keine externe Stromzufuhr verfügbar ist, und kann geladen werden, wenn elektrische Energie verfügbar ist, sowohl durch eigene Stromerzeugung oder über externe Stromquellen.

Dabei ist es ferner besonders bevorzugt, wenn die Energieversorgungsbauteile mindestens einen elektrischen Generator, vorzugsweise einen AC Asynchrongenerator mit 22kW, zum Laden der Batterie umfassen. Der Generator kann beispielsweise durch kinetische Energie aus der Bewegung des Gelenkwagens angetrieben werden. Auf diese Weise kann die Batterie mit einem eigens in der Energieversorgungseinheit vorgesehenen Generator geladen werden, beispielsweise während der Fahrt des Gelenkwagens.

Vorzugsweise wird dabei der Generator mit Hydraulikdruck betrieben. Hydraulikdruck eignet sich besonders, um einen Generator zu betreiben und kann unkompliziert beispielsweise aus kinetischer Energie erzeugt werden.

Weiter ist es bevorzugt, wenn die Gelenkwagenanordnung zur Bereitstellung des Hydraulikdrucks eine Hydraulikpumpe, insbesondere eine Axialkolben-Konstantpumpe, aufweist, die insbesondere an einem Radsatz, vorzugsweise an einem Radsatz des gemeinsamen Drehgestells, montiert und von diesem angetrieben ist. Vorzugsweise ist die Hydraulikpumpe an der Radnabe befestigt und nimmt dort die kinetische Energie aus der Drehung des Rads ab. Zur Verbindung der Hydraulikpumpe mit dem Generator sind vorzugsweise Hydraulikschläuche, insbesondere drei Hydraulikschläuche, vorgesehen, welche den Hydraulikdruck von der Hydraulikpumpe zu dem Generator transportieren. Mit einer solchen Hydraulikpumpe am Radsatz kann der zur Stromerzeugung vom Generator geforderte Hydraulikdruck unkompliziert und zuverlässig bereitgestellt werden, ohne dass umfangreiche Anpassungen des Gelenkwagens notwendig sind.

In einer bevorzugten Ausführungsform umfassen die Energieversorgungsbauteile mindestens ein Netz-Ladegerät, vorzugsweise ein HF-Netz-Ladegerät mit 10kW, zum Laden der Batterie mit externem Netzstrom. Vorzugsweise umfassen die Energieversorgungsbauteile ferner mindestens einen zugehörigen Ladeanschluss, vorzugsweise zwei CEE-Ladedosen, 5-polig, zur Verbindung des Netz-Ladegeräts mit einem externen Netzanschluss. Mit einem solchen Netz-Ladegerät und zusätzlichen Ladeanschluss kann die Batterie über eine externe Stromversorgung geladen werden. Das Laden der Batterie über das Netz-Ladegerät kann dabei zusätzlich zu dem Laden mittels Generators oder unabhängig von diesem erfolgen.

In einer weiteren bevorzugten Ausführungsform umfassen die Energieversorgungsbauteile mindestens einen Lastanschluss, vorzugsweise vier CEE-Lastdosen, 4-polig und/oder 5-polig, vorzugsweise je zwei pro Seite der Energieversorgungseinheit, zur Verbindung mit einem entsprechenden Anschluss an einem Container zur Versorgung eines Verbrauchers, wie beispielsweise einer Kühl- bzw. Heizanlage. Auf diese Weise kann jeder Container einfach und schnell mit der Energieversorgungseinheit verbunden werden, auch für den Fall, dass je Wagenteil zwei Container geladen werden.

Bevorzugte Ausführungsbeispiele der vorliegenden Erfindung werden im Folgenden anhand einer Zeichnung näher erläutert. Die Zeichnung zeigt in
- Fig. 1: eine Seitenansicht einer Gelenkwagenanordnung nach einer Ausführungsform der Erfindung,
- Fig. 2: eine Detailansicht von oben auf den Bereich der Gelenkkupplung der Gelenkwagenanordnung aus Fig. 1 mit der dort angeordneten Energieversorgungseinheit,
- Fig. 3: eine Seitenansicht der Gelenkwagenanordnung aus Fig. 1 beladen mit zwei Kühl-Sattelanhängern,
- Fig. 4: eine Seitenansicht der Gelenkwagenanordnung aus Fig. 1 beladen mit zwei Reefer-Containern,
- Fig. 5: eine Seitenansicht der Gelenkwagenanordnung aus Fig. 1 beladen mit vier Kühl-Wechselbrücken,
- Fig. 6: eine Detailansicht von oben auf den Bereich der Gelenkkupplung der Gelenkwagenanordnung aus Fig. 5 ohne Energieversorgungseinheit,
- Fig. 7: eine perspektivische Ansicht einer isolierten Adapterplatte zur Befestigung einer Energieversorgungseinheit an einem Gelenkwagen gemäß der Erfindung,
- Fig. 8: eine Detailansicht von oben auf den Bereich der Gelenkkupplung der Gelenkwagenanordnung aus Fig. 1 mit dort befestigten Adapterplatten aber ohne Energieversorgungseinheit,
- Fig. 9: eine isolierte Ansicht von oben auf das Ende des ersten Wagenteils der Gelenkwagenanordnung aus Fig. 1 und der dort befestigten Energieversorgungseinheit,
- Fig. 10: eine isolierte Ansicht von vorne auf das Ende des ersten Wagenteils der Gelenkwagenanordnung aus Fig. 1 und der dort befestigten Energieversorgungseinheit,
- Fig. 11: eine Detailansicht der Befestigung der Energieversorgungseinheit am Ende des ersten Wagenteils aus Fig. 10 mit Blick auf einen Befestigungszapfen einer Adapterplatte in Eingriff mit einer Zapfenaufnahme eines Containers,
- Fig. 12: eine Seitenansicht einer erfindungsgemäßen Gelenkwagenanordnung mit Blick auf eine am Radsatz montierte Hydraulikpumpe
- Fig. 13: eine perspektivische isolierte Ansicht der Hydraulikpumpe aus Fig. 12 und
- Fig. 14: eine Ansicht von vorne auf eine erfindungsgemäße Energieversorgungseinheit mit aufgeschnittener Tragstruktur und Blick auf die Energieversorgungsbauteile im Inneren der Tragstruktur.

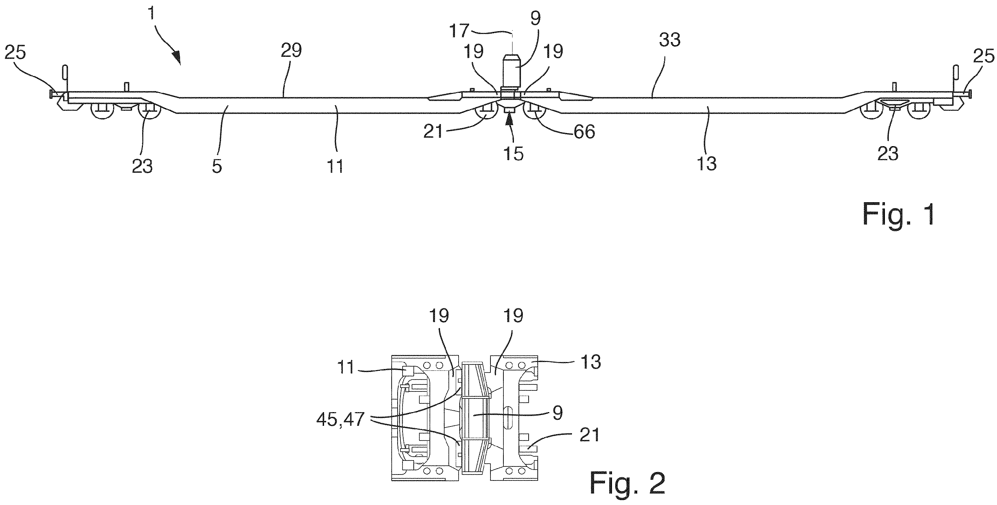

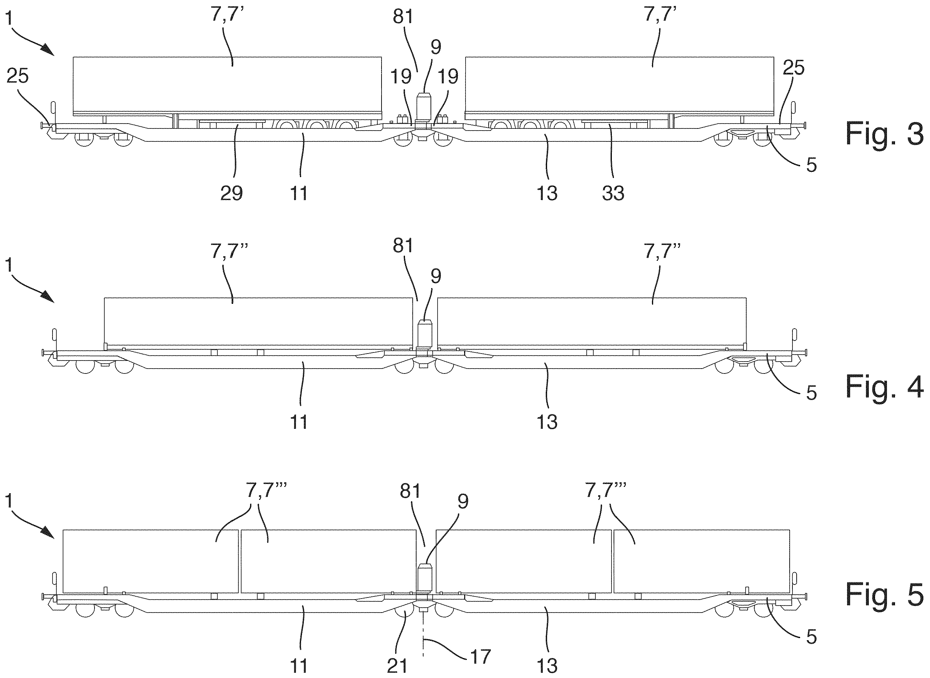

In Fig. 1 und 2 ist eine erfindungsgemäße Gelenkwagenanordnung 1 für einen Eisenbahngüterzug dargestellt. Die Gelenkwagenanordnung 1 umfasst einen Gelenkwagen 5 zum Transport von Containern 7, auch Containertragwagen (CTW) genannt, sowie eine Energieversorgungseinheit 9 zur elektrischen Energieversorgung von auf dem Gelenkwagen 5 geladenen Containern 7. Solche Container 7 können beispielsweise Kühl-Sattelanhänger 7' wie in Fig. 3 gezeigt, sogenannte Reefer-Container 7" wie in Fig. 4 gezeigt, Kühl-Wechselbrücken 7‴ wie in Fig. 5 gezeigt, oder Tank-Container sein.

Der Gelenkwagen 5 umfasst einen ersten Wagenteil 11 und einen zweiten Wagenteil 13, wobei der erste und der zweite Wagenteil 11, 13 über eine Gelenkkupplung 15 gelenkig um eine vertikale Gelenkachse 17 miteinander gekoppelt sind und im Bereich der Gelenkkupplung 15 an ihren zueinander weisenden Enden 19 auf einem gemeinsamen Drehgestell 21 abgestützt sind. Weitere Drehgestelle 23 sind an den voneinander wegweisenden Enden 25 der beiden Wagenteile 11, 13 vorgesehen. Der erste Wagenteil 11 weist an seiner Oberseite einen ersten Containerstellplatz 29 für einen oder mehrere Container 7 auf und der zweite Wagenteil 13 weist an seiner Oberseite einen zweiten Containerstellplatz 33 für einen oder mehrere Container 7 auf.

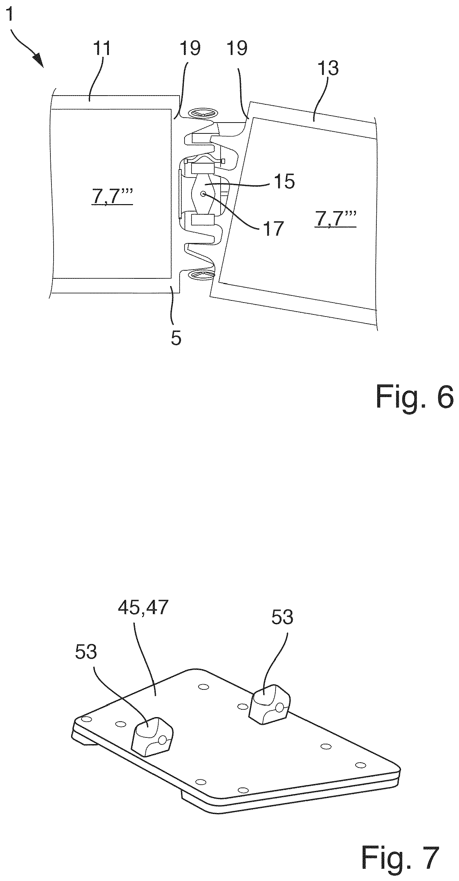

Die Energieversorgungseinheit 9 ist eingerichtet zur autonomen elektrischen Energieversorgung der Container 7 ohne Rückgriff auf eine Energieversorgung der Lokomotive, eines anderen Gelenkwagens oder der Oberleitung. Die Energieversorgungseinheit 9 ist im Bereich der Gelenkkupplung 15 des ersten und des zweiten Wagenteils 11, 13 oberhalb des gemeinsamen Drehgestells 21 mittig zwischen dem ersten und dem zweiten Containerstellplatz 29, 33 bzw. den darauf platzierten Containern 7 angeordnet und befestigt, wie in den Fig. 1 bis 5 erkennbar ist. Fig. 6 zeigt einen unversperrten Blick auf die Gelenkkupplung 15 von oben.

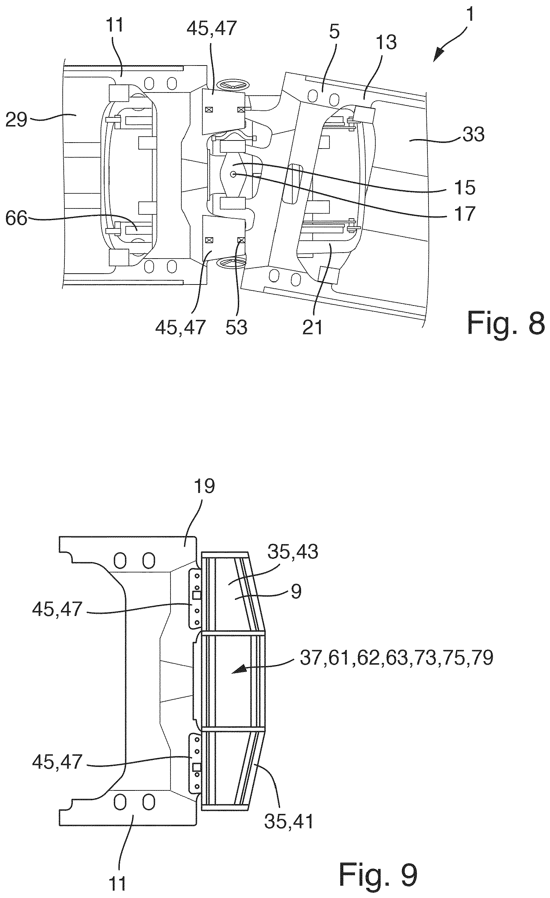

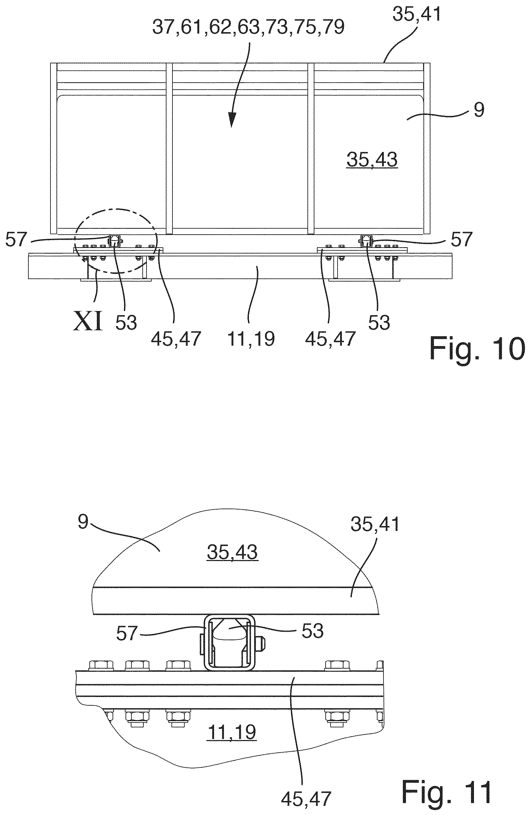

Wie beispielsweise in Fig. 9 und 10 erkennbar ist, umfasst die Energieversorgungseinheit 9 eine Tragstruktur 35 und mehrere an bzw. in der Tragstruktur 35 befestigte Energieversorgungsbauteile 37. Die Tragstruktur 35 hat eine geschlossene Gehäuseform gebildet durch eine geschweißte Stahlrahmenkonstruktion 41 mit Außenverschalung 43 aus Stahlblech.

Die Tragstruktur 35 ist über eine Adaptervorrichtung 45 an dem Gelenkwagen 5 befestigt, wie dies in den Fig. 7 bis 11 gezeigt ist. Dabei ist in Fig. 7 und 8 dargestellt, dass die Adaptervorrichtung 45 zwei in Querrichtung des Gelenkwagens 5 beabstandete Adapterplatten 47 umfasst, die an dem zum zweiten Wagenteil 13 weisenden Ende 19 des ersten Wagenteils 11 an dessen Oberseite befestigt sind und zum zweiten Wagenteil 13 hin ragen. Die Adapterplatten 47 weisen an ihrer Oberseite jeweils zwei Befestigungszapfen 53 auf und die Tragstruktur 35 weist an der Unterseite der Stahlrahmenkonstruktion 41 vier entsprechende Zapfenaufnahmen 57 zum Eingriff und zum Verrasten mit den Befestigungszapfen 53 auf, wie dies in Fig. 10 und 11 erkennbar ist. Die Befestigungszapfen 53 sind als Containerzapfen nach Norm UIC 571-4 gebildet, wie sie standartmäßig an den Containerstellplätzen 29, 33 zur Befestigung der Container 7 vorgesehen sind. Auch die Zapfenaufnahmen 57 sind nach Norm UIC 571-4 ausgebildet, so dass zwischen Befestigungszapfen 53 und Zapfenaufnahme 57 eine Standartverbindung ausgebildet wird.

Die Energieversorgungsbauteile 37 umfassen einen Energiespeicher 61 mit mehreren aufladbaren Batterien 62, insbesondere zwischen drei und sieben Hochleistungs-Akku-Strings aus LiFePO4 mit je 9kWh und modularer Speicherkapazität von 27kWh bis 63kWh. Die Energieversorgungsbauteile 37 umfassen ferner einen elektrischen Generator 63 zum Laden der Batterien 62, insbesondere einen AC Asynchrongenerator mit 22kW. Der Generator 63 wird durch Hydraulikdruck aus der kinetischen Energie der Bewegung des Gelenkwagens 5 angetrieben.

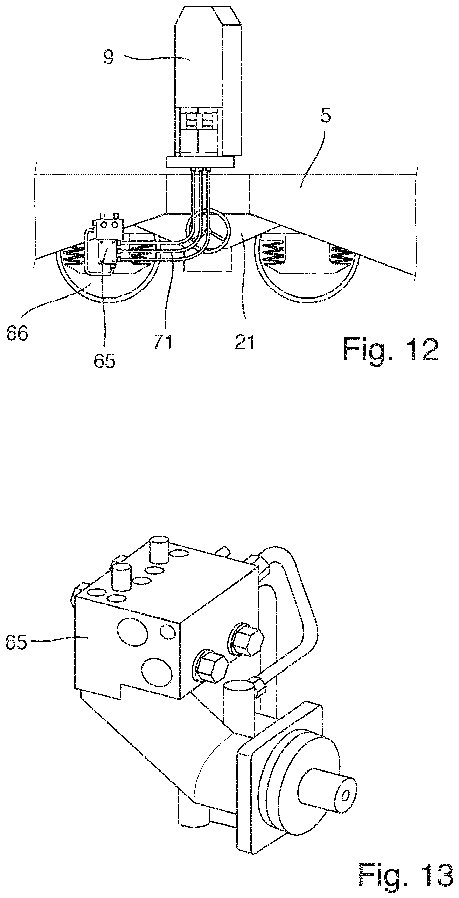

Zur Bereitstellung des Hydraulikdrucks zum Antreiben des Generators 63 weist die Gelenkwagenanordnung 1 eine Hydraulikpumpe 65 auf, insbesondere eine Axialkolben-Konstantpumpe, die an einem Radsatz 66 des gemeinsamen Drehgestells 21 montiert und von diesem angetrieben ist, wie dies in Fig. 12 gezeigt ist. In Fig. 13 ist die Hydraulikpumpe 65 isoliert dargestellt. Dabei ist die Hydraulikpumpe 65 an der Radnabe befestigt, nimmt dort die kinetische Energie aus der Drehung des Radsatzes 66 ab und wandelt sie in hydraulische Energie bzw. Hydraulikdruck um, der dann zum Generator 63 geleitet wird und diesen antreibt. Zur Verbindung der Hydraulikpumpe 65 mit dem Generator 63 sind drei Hydraulikschläuche 71 vorgesehen, welche den Hydraulikdruck von der Hydraulikpumpe 65 zu dem Generator 63 leiten.

Ferner umfassen die Energieversorgungsbauteile 37 ein Netz-Ladegerät 73, insbesondere ein HF-Netz-Ladegerät mit 10kW, zum Laden der Batterie 62 mit externem Netzstrom. Außerdem umfassen die Energieversorgungsbauteile 37 mindestens einen zugehörigen Ladeanschluss 75, insbesondere zwei CEE-Ladedosen, 5-polig, zur Verbindung des Netz-Ladegeräts 73 mit einem externen Netzanschluss.

Des Weiteren umfassen die Energieversorgungsbauteile 37 mindestens einen Lastanschluss 79, insbesondere vier CEE-Lastdosen, 4-polig und/oder 5-polig, je zwei pro Seite der Energieversorgungseinheit 9, zur Verbindung mit einem entsprechenden Anschluss an einem Container 7 zur Versorgung eines Verbrauchers, wie beispielsweise einer Kühl- bzw. Heizanlage der Container.

Neben den zuvor genannten sind noch folgende weitere Energieversorgungsbauteile 37 vorgesehen: mindestens ein Umrichter, insbesondere zwei 30 kW Mobile Drive Dualinverter, für den Generatorbetrieb und den Kühlaggregate-Betrieb; mindestens eine Reglereinheit, insbesondere ein PMU-8-Dreifels-Controller mit separatem 24V Bord-Akku und Standby Management, für das Systemmanagement und Monitoring; mindestens ein Bedien- und Überwachungsmodul zum Starten der Energieversorgungseinheit 9 und Überwachen des Betriebszustands.

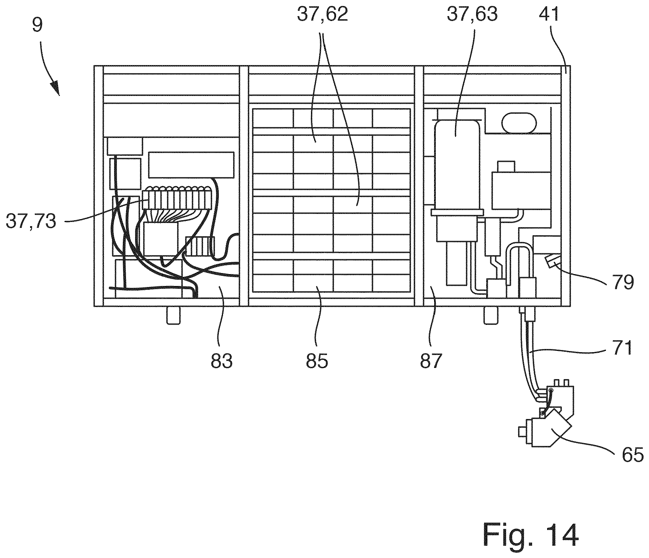

In Fig. 14 ist die Anordnung der Energieversorgungsbauteile 37 im Inneren der Energieversorgungseinheit 9 dargestellt. Die Energieversorgungsbauteile sind dabei in drei separaten Kompartments 83, 85, 87 angeordnet. In einem ersten Kompartment 83 auf der linken Seite sind Elektronik und Steuerung angeordnet, insbesondere Umrichter, Reglereinheit, Bedien- und Überwachungsmodul sowie Netz-Ladegerät 73. In einem zweiten Kompartment 85 in der Mitte sind die Batterien 62 untergebracht, insbesondere die Hochleistungs-Akku-Strings, die in mehreren Schubfächern rasterförmig unter- und nebeneinander und separat entnehmbar angeordnet sind. In einem dritten Kompartment 87 auf der rechten Seite sind Generator 63 und Hydraulikschläuche 71 angeordnet. Ebenfalls in Fig. 14 dargestellt ist die Hydraulikpumpe 65, die über die Hydraulikschläuche 71 mit dem Generator verbunden ist. Außerdem ist auf der rechten Seite des dritten Kompartments 87 ein Lastanschluss 79 zu erkennen.

Mit der oben beschriebenen Gelenkwagenanordnung 1 kann eine ununterbrochene Energieversorgung von geladenen Containern 7 auch im Stillstand und Rangierbetrieb einfach gewährleistet werden. Ferner wird der freie spaltförmige Raum 81 zwischen den Containern 7 benachbarter Wagenteile 11, 13 eines Gelenkwagens 5 für die Unterbringung der Energieversorgungseinheit 9 genutzt. Dieser Raum 81 ist ausreichend groß, um eine Energieversorgungseinheit 9 unterzubringen, welche die Kühl- oder Heizanlage eines Containers 7 für Temperatur-kontrollierte Güter versorgen kann. Gleichzeitig wird auf diese Weise kein Platz unterhalb der Containerstellplätze 29, 33 oder an anderen die Containerstellplätze 29, 33 einschränkenden Orten der Wagenteile 11, 13 von der Energieversorgungseinheit 9 eingenommen, so dass der der für die Container 7 verfügbare Raum maximiert wird.

## Patentansprüche

1. Verwendung einer Energieversorgungseinheit (9) für eine Gelenkwagenanordnung (1) für einen Eisenbahngüterzug, wobei die Gelenkwagenanordnung (1)
einen Gelenkwagen (5) zum Transport von Containern (7) mit einem ersten Wagenteil (11) und einem zweiten Wagenteil (13), wobei der erste und der zweite Wagenteil (11, 13) über eine Gelenkkupplung (15) gelenkig um eine vertikale Gelenkachse (17) miteinander gekoppelt sind, wobei der erste Wagenteil (11) an seiner Oberseite einen ersten Containerstellplatz (29) für einen oder mehrere Container (7) aufweist und wobei der zweite Wagenteil (13) an seiner Oberseite einen zweiten Containerstellplatz (33) für einen oder mehrere Container (7) aufweist, und
die Energieversorgungseinheit (9) zur Energieversorgung von auf dem Gelenkwagen (5) geladenen Containern (7) aufweist,
wobei die Energieversorgungseinheit (9) eine Tragstruktur (35) und mehrere an der Tragstruktur (35) befestigte Energieversorgungsbauteile (37) aufweist,
wobei die Energieversorgungseinheit (9) im Bereich der Gelenkkupplung (15) des ersten und des zweiten Wagenteils (11, 13) zwischen dem ersten und dem zweiten Containerstellplatz (29, 33) angeordnet und die Tragstruktur (35) über eine Adaptervorrichtung (45) an dem Gelenkwagen (5) der Gelenkwagenanordnung (1) befestigt wird.

2. Verwendung einer Energieversorgungseinheit (9) nach Anspruch 1, wobei die Adaptervorrichtung (45) mindestens eine Adapterplatte (47), vorzugsweise zwei Adapterplatten (47), umfasst, die am Ende (19) des ersten Wagenteils (11) befestigt ist bzw. sind und zum zweiten Wagenteil (13) hin ragt bzw. ragen.

3. Verwendung einer Energieversorgungseinheit (9) nach Anspruch 1 oder 2, wobei die Adaptervorrichtung (45) Befestigungszapfen (53) aufweist und wobei die Tragstruktur (35) entsprechende Zapfenaufnahmen (57) zum Eingriff mit den Befestigungszapfen (53) aufweist.

4. Verwendung einer Energieversorgungseinheit (9) nach Anspruch 3, wobei die Befestigungszapfen (53) Containerzapfen nach Norm UIC 571-4 sind.

5. Verwendung einer Energieversorgungseinheit (9) nach einem der Ansprüche 1 bis **4,** wobei die Energieversorgungsbauteile (37) mindestens einen Energiespeicher (61) umfassen.

6. Verwendung einer Energieversorgungseinheit (9) nach Anspruch 5, wobei der Energiespeicher (61) mindestens eine aufladbare Batterie (62) umfasst.

7. Verwendung einer Energieversorgungseinheit (9) nach Anspruch 6, wobei die Energieversorgungsbauteile (37) mindestens einen elektrischen Generator (63) zum Laden der Batterie (62) umfassen.

8. Verwendung einer Energieversorgungseinheit (9) nach Anspruch 7, wobei der Generator (63) mit Hydraulikdruck betrieben wird.

9. Verwendung einer Energieversorgungseinheit (9) nach Anspruch 8, wobei die Gelenkwagenanordnung (1) zur Bereitstellung des Hydraulikdrucks eine Hydraulikpumpe (65) aufweist, die an einem Radsatz (66) montiert und von diesem angetrieben ist.

10. Verwendung einer Energieversorgungseinheit (9) nach einem der Ansprüche 6 bis 9, wobei die Energieversorgungsbauteile (37) mindestens ein Netz-Ladegerät (73) zum Laden der Batterie (7) mit externem Netzstrom umfassen sowie mindestens einen zugehörigen Ladeanschluss (75) zur Verbindung mit einem externen Netzanschluss umfassen.

11. Verwendung einer Energieversorgungseinheit (9) nach einem der Ansprüche 6 bis 10, wobei die Energieversorgungsbauteile (37) mindestens einen Lastanschluss (79) zur Verbindung mit einem entsprechenden Anschluss an einem Container (7) umfassen.

## Claims

1. Use of a power supply unit (9) for an articulated wagon arrangement (1) for a railway goods train, wherein the articulated wagon arrangement (1)
has an articulated wagon (5) for transporting containers (7), having a first wagon part (11) and a second wagon part (13), wherein the first and the second wagon part (11, 13) by way of an articulated coupling (15) are coupled to one another so as to be articulated about a vertical articulation axis (17), wherein the first wagon part (11) on the upper side thereof has a first container storage space (29) for one or a plurality of containers (7), and wherein the second wagon part (13) on the upper side thereof has a second container storage space (33) for one or a plurality of containers (7), and
has the power supply unit (9) for supplying energy to containers (7) loaded on the articulated carriage (5), wherein the power supply unit (9) has a support structure (35) and a plurality of power supply components (37) fastened to the support structure (35),
wherein the power supply unit (9) is disposed in the region of the articulated coupling (15) of the first and of the second wagon part (11, 13), between the first and the second container storage space (29, 33), and the support structure (35) is fastened to the articulated wagon (5) of the articulated wagon arrangement (1) by way of an adapter device (45).

2. Use of a power supply unit (9) according to Claim **1,** wherein the adapter device (45) comprises at least one adapter plate (47), preferably two adapter plates (47), which is/are fastened to the end (19) of the first wagon part (11) and protrudes/protrude towards the second wagon part (13).

3. Use of a power supply unit (9) according to Claim 1 **or 2,** wherein the adapter device (45) has fastening pins (53), and wherein the support structure (35) has corresponding pin receptacles (57) for engaging with the fastening pins (53).

4. Use of a power supply unit (9) according to Claim 3, wherein the fastening pins (53) are container pins according to standard UIC 571-4.

5. Use of a power supply unit (9) according to one of Claims 1 to 4, wherein the power supply components (37) comprise at least one energy store (61).

6. Use of a power supply unit (9) according to Claim 5, wherein the energy store (61) comprises at least one rechargeable battery (62).

7. Use of a power supply unit (9) according to Claim 6, wherein the power supply components (37) comprise at least one electric generator (63) for charging the battery (62).

8. Use of a power supply unit (9) according to Claim 7, wherein the generator (63) is operated by hydraulic pressure.

9. Use of a power supply unit (9) according to Claim 8, wherein the articulated wagon arrangement (1) for providing the hydraulic pressure has a hydraulic pump (65) which is assembled on a wheelset (66) and driven by the latter.

10. Use of a power supply unit (9) according to one of Claims 6 to 9, wherein the power supply components (37) comprise at least one mains charging apparatus (73) for charging the battery (7) with an external mains current, and comprise at least one associated charging connector (75) for connecting to an external mains connection.

11. Use of a power supply unit (9) according to one of Claims 6 to 10, wherein the power supply components (37) comprise at least one load connector (79) for connecting to a corresponding connector on a container (7).

## Revendications

1. Utilisation d'une unité d'alimentation en énergie (9) pour un agencement de wagons articulés (1) pour un train de marchandises ferroviaire, l'agencement de wagons articulés (1) présentant
un wagon articulé (5) pour le transport de conteneurs (7) avec une première partie de wagon (11) et une deuxième partie de wagon (13), la première et la deuxième partie de wagon (11, 13) étant couplées l'une à l'autre de manière articulée autour d'un axe d'articulation vertical (17) par l'intermédiaire d'un accouplement articulé (15), la première partie de wagon (11) présentant sur son côté supérieur un premier emplacement de conteneur (29) pour un ou plusieurs conteneurs (7) et la deuxième partie de wagon (13) présentant sur son côté supérieur un deuxième emplacement de conteneur (33) pour un ou plusieurs conteneurs (7), et
l'unité d'alimentation en énergie (9) pour l'alimentation en énergie de conteneurs (7) chargés sur le chariot articulé (5),
l'unité d'alimentation en énergie (9) présentant une structure porteuse (35) et plusieurs composants d'alimentation en énergie (37) fixés à la structure porteuse (35),
l'unité d'alimentation en énergie (9) étant agencée dans la zone de l'accouplement articulé (15) de la première et de la deuxième partie de wagon (11, 13) entre le premier et le deuxième emplacement de conteneur (29, 33) et la structure porteuse (35) étant fixée au wagon articulé (5) de l'agencement de wagons articulés (1) par l'intermédiaire d'un dispositif d'adaptation (45).

2. Utilisation d'une unité d'alimentation en énergie (9) selon la revendication 1, le dispositif d'adaptation (45) comprenant au moins une plaque d'adaptation (47), de préférence deux plaques d'adaptation (47), qui est ou sont fixées à l'extrémité (19) de la première partie de wagon (11) et fait ou font saillie vers la deuxième partie de wagon (13).

3. Utilisation d'une unité d'alimentation en énergie (9) selon la revendication 1 ou 2, le dispositif d'adaptation (45) présentant des tenons de fixation (53) et la structure porteuse (35) présentant des logements de tenon correspondants (57) pour l'engagement avec les tenons de fixation (53).

4. Utilisation d'une unité d'alimentation en énergie (9) selon la revendication 3, les tenons de fixation (53) étant des tenons de conteneur selon la norme UIC 571-4.

5. Utilisation d'une unité d'alimentation en énergie (9) selon l'une quelconque des revendications 1 à 4, les composants d'alimentation en énergie (37) comprenant au moins un accumulateur d'énergie (61).

6. Utilisation d'une unité d'alimentation en énergie (9) selon la revendication 5, l'accumulateur d'énergie (61) comprenant au moins une batterie rechargeable (62).

7. Utilisation d'une unité d'alimentation en énergie (9) selon la revendication 6, les composants d'alimentation en énergie (37) comprenant au moins un générateur électrique (63) pour charger la batterie (62).

8. Utilisation d'une unité d'alimentation en énergie (9) selon la revendication 7, le générateur (63) fonctionnant avec une pression hydraulique.

9. Utilisation d'une unité d'alimentation en énergie (9) selon la revendication 8, l'agencement de wagons articulés (1) présentant, pour fournir la pression hydraulique, une pompe hydraulique (65) montée sur un jeu de roues (66) et entraînée par celui-ci.

10. Utilisation d'une unité d'alimentation en énergie (9) selon l'une quelconque des revendications 6 à 9, les composants d'alimentation en énergie (37) comprenant au moins un chargeur secteur (73) pour charger la batterie (7) avec une alimentation secteur externe et comprenant au moins une borne de charge associée (75) pour la connexion à une borne secteur externe.

11. Utilisation d'une unité d'alimentation en énergie (9) selon l'une quelconque des revendications 6 à 10, les composants d'alimentation en énergie (37) comprenant au moins une borne de charge (79) pour la connexion à une borne correspondante sur un conteneur (7).
